# EUROPEAN PATENT APPLICATION

(11) **EP 4 059 895 A2**
(43) Date of publication of application: **21.09.2022**
(21) Application number: 22161694.9
(22) Date of filing: 11.03.2022
(51) Int. Cl.: C01G 53/04, C01G 53/00, H01M 4/131, H01M 4/1391, H01M 10/0525

(54) **CATHODE ACTIVE MATERIAL FOR SECONDARY BATTERY, METHOD OF PREPARING THE SAME AND SECONDARY BATTERY INCLUDING THE SAME**

(30) Priority: 15.03.2021 KR 20210033221; 21.07.2021 KR 20210095362
(71) Applicant: SK On Co., Ltd., Seoul 03188 (KR)
(72) Inventor: KWEON, Hee Jun, 34124 Daejeon (KR); PARK, Sung Soon, 34124 Daejeon (KR); KIM, Jik Soo, 34124 Daejeon (KR); LEE, Tae Kyoung, 34124 Daejeon (KR); CHOI, Ji Hoon, 34124 Daejeon (KR); HA, Dong Wook, 34124 Daejeon (KR)
(74) Representative: Stolmár & Partner Patentanwälte PartG mbB

(57) **Abstract**

A cathode active material for a secondary battery includes a lithium metal oxide particle having a secondary particle structure in which a plurality of primary particles are aggregated, a first coating portion formed on at least a portion of a surface of the lithium metal oxide particle, the first coating portion including a first metal, and a second coating portion formed on at least a portion of an interface between the primary particles, the second coating portion including a second metal. A secondary battery including the cathode active material is provided.

## Description

### CROSS-REFERENCE TO RELATED APPLICATION

This application claims priority to Korean Patent Applications No. 10-2021-0033221 filed on March 15, 2021 and No. 10-2021-0095362 filed on July 21, 2021 in the Korean Intellectual Property Office (KIPO), the entire disclosure of which is incorporated by reference herein.

### BACKGROUND

### 1. Field

The present invention relates to a cathode active material for a secondary battery, a method of forming the same and a secondary battery including the same. More particularly, the present invention relates to a cathode active material for a secondary battery including a high-Ni content active material, a method of forming the same and a secondary battery including the same.

### 2. Description of the Related Art

A secondary battery which can be charged and discharged repeatedly has been widely employed as a power source of a mobile electronic device such as a camcorder, a mobile phone, a laptop computer, etc.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

A cathode of the lithium secondary battery may include a cathode active material capable of reversibly intercalating and de-intercalating of lithium ions, and a lithium metal oxide may be used as the cathode active material.

The lithium metal oxide may contain, e.g., a metal such as nickel, cobalt, manganese, aluminum, etc.

As an application range of the lithium secondary battery has been expanded into large-scaled devices such as a hybrid vehicle, a high-nickel lithium metal oxide with an increased nickel content is being researched and developed to obtain high capacity from the lithium secondary battery.

However, the high-nickel lithium metal oxide has a relatively degraded chemical stability, thereby deteriorating the life-span property during repeated charge and discharge.

For example, Korean Registered Patent Publication No. 10-0821523 discloses a method of manufacturing a cathode active material including a high-nickel lithium composite oxide.

### SUMMARY

According to an aspect of the present invention, there is provided a cathode active material for a secondary battery having high-capacity property and improved chemical stability.

According to an aspect of the present invention, there is provided a method of preparing a cathode active material for a secondary battery having high-capacity property and improved chemical stability.

According to exemplary embodiments, there is provided a secondary battery having high-capacity property and improved chemical stability.

A cathode active material for a secondary battery according to embodiments of the present invention includes a lithium metal oxide particle having a secondary particle structure in which a plurality of primary particles are aggregated, a first coating portion formed on at least a portion of a surface of the lithium metal oxide particle, the first coating portion including a first metal, and a second coating portion formed on at least a portion of an interface between the primary particles, the second coating portion including a second metal.

In some embodiments, the second coating portion may be also formed on at least a portion of a surface of the first coating portion.

In some embodiments, the second coating portion may be also formed on at least a portion of the surface of the lithium metal oxide particle on which the first coating portion may not be formed.

In some embodiments, the first coating portion and the second coating portion may have an island-sea shape.

In some embodiments, in an energy-dispersive X-ray spectroscopy spectrum measured for a cross-section of the cathode active material, a peak intensity of the second metal from the interface of the primary particles may be greater than an average value of peak intensities of the second metal from an inside of the primary particles.

In some embodiments, the lithium metal oxide particle may include nickel, and a content of nickel in the lithium metal oxide particle may be 88 mol% or more based on a total number of moles of all elements excluding lithium and oxygen.

In some embodiments, the first metal may include at least one of aluminum, titanium, zirconium, magnesium, zinc, tungsten, niobium, strontium, tantalum and copper.

In some embodiments, the second metal includes at least one of aluminum, titanium and zirconium.

In some embodiments, the cathode active material for a secondary battery further includes a third coating portion formed on at least a portion of the second coating portion, the third coating portion including a metalloid.

In some embodiments, the metalloid may include boron.

A lithium secondary battery includes a cathode including the cathode active material for a secondary battery according to embodiments as described above, and an anode facing the cathode.

In a method of preparing a cathode active material for a secondary battery according to embodiments of the present invention, a lithium metal oxide particle having a secondary particle structure in which a plurality of primary particles are aggregated is prepared. The lithium metal oxide particle is dry-coated with a coating source containing a first metal. The dry-coated lithium metal oxide particle is wet-coated with a coating source containing a second metal so that at least a portion of an interface between the primary particles is coated.

In some embodiments, the wet-coating may be performed using water as a solvent.

In some embodiments, in the wet coating, the coating source containing the second metal and the dry-coated lithium metal oxide particle may be mixed, and then dried at a temperature of 100 °C or more and less than 300° C.

In some embodiments, the wet-coated lithium metal oxide particle may be coated with a coating source containing a metalloid.

In a cathode active material for a secondary battery according to exemplary embodiments, a metal coating may be formed on an outer surface of a lithium metal oxide particle. Further, a metal (e.g., Al) coating portion may be formed at an interface of primary particles included in the lithium metal oxide particle.

Thus, enhanced chemical stability may be achieved even in a high-nickel composition. A lithium secondary battery including the cathode active material may stably maintain high-capacity properties and provide improved life-span properties.

### BRIEF DESCRIPTION OF THE DRAWINGS

FIG. 1 is a schematic flow diagram describing a method of preparing a cathode active material in accordance with exemplary embodiments.
FIG. 2 is a schematic cross-sectional view illustrating a lithium secondary battery in accordance with exemplary embodiments.
FIG. 3A is a transmission electron microscope (TEM) image of a cross-section of a lithium metal oxide particle of Example 1.
FIG. 3B is an energy-dispersive X-ray spectroscopy (EDS)-mapping image obtained by an EDS analysis of an aluminum (Al) distribution in a region indicated in FIG. 3A.
FIG. 4 is a TEM (Transmission Electron Microscope) image of a cross-section around a surface of the lithium metal oxide particle of Example 1.
FIG. 5 is a graph showing evaluation results of capacity retentions at room temperature for the secondary batteries of Example 1 and Comparative Examples 1, 3, and 8.
FIG. 6A is a graph showing resistance values at predetermined intervals measured when evaluating the capacity retentions at room temperature for the secondary batteries of Example 1.
FIG. 6B is a graph showing resistance increasing ratios at predetermined intervals measured when evaluating the capacity retentions at room temperature for the secondary batteries of Example 1.
FIG. 7 is a graph showing evaluation results of capacity retentions at room temperature for the secondary batteries of Examples 1 and 3.
FIGS. 8A to 8C shows TEM images of cross-sections from cathode active material layers after repeating 150 cycles of charge and discharge of the secondary batteries according to Comparative Examples 1 and 3 and Example 1, repectively.

### DETAILED DESCRIPTION OF THE EMBODIMENTS

The term "primary particle" used herein may refer to a single particle or a monolithic particle that exists independently without forming an aggregate.

The term "secondary particle" used herein may refer to a particle having a structure in which the primary particles are aggregated.

For example, the primary particle and the secondary particle may be distinguished based on a transmission electron microscope (TEM) image.

As a nickel content of a lithium metal oxide particle increases, a structural change due to lithium insertion and deintercalation during charging and discharging may be increased, and a volume change (particularly, a c-axis) of a unit cell may also be increased.

For example, the lithium metal oxide particles having a composition of Ni 60 (a content of Ni with respect to a total number of moles of all elements excluding lithium and oxygen in the lithium metal oxide particle is 60 mol %) has a c-axis change ratio of about 2.5% in a range from 3.0 V to 4.5 V, and the lithium metal oxide particle having a composition of Ni 80 has a c-axis change ratio of about 3.7% which is less than 4%.

The c-axis change ratio of the lithium metal oxide particle having a Ni content of 80 mol% or less may not be excessively large, and thus a penetration of an electrolyte due to a c-axis contraction of the lithium metal oxide particle may be relatively small. Thus, in the lithium metal oxide particle having the Ni content 80mol% or less, a sufficient chemical stability al properties may be obtained only by a surface metal (or metalloid) coating.

However, in a lithium metal oxide having a Ni content greater than 80 mol%, e.g., 88mol%, a c-axis change ratio is 5% or more. For example, the c-axis change ratio in the lithium metal oxide having the Ni content of 88 mol% is about 5.1%, the c-axis change ratio in the lithium metal oxide having the Ni content of 90 mol% is about 5.6%, and the c-axis change ratio in the lithium metal oxide having the Ni content of 95 mol% is about 6.9%

Thus, sufficient chemical stability may not be obtained only by the surface metal (or metalloid) coating in the lithium metal oxide having a Ni content of 88 mol% or more.

According to embodiments of the present inventive concepts, a cathode active material having improved chemical properties even in a composition of Ni 88 or higher, a method for preparing the cathode active material, and a lithium secondary battery including the cathode active material may be provided.

### <Cathode Active Material and Method of Preparing the Same>

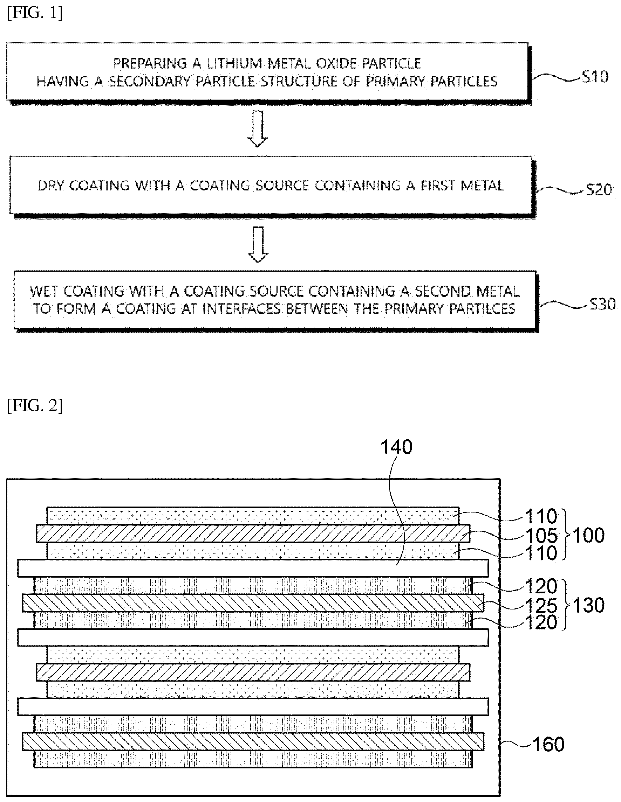

FIG. 1 is a schematic flow diagram describing a method of preparing a cathode active material in accordance with exemplary embodiments.

In exemplary embodiments, in, e.g., an operation of S10, a lithium metal oxide particle having a secondary particle structure including a plurality of primary particles aggregated therein may be prepared.

In an embodiment, the lithium metal oxide particle may include nickel (Ni).

In some embodiments, the lithium metal oxide particle may further include nickel, cobalt (Co), manganese (Mn), or the like.

In an embodiment, the lithium metal oxide particle may contain an excess amount of nickel (e.g., the highest content among elements other than lithium and oxygen in the lithium metal oxide particle) to provide a high-capacity secondary battery.

In some embodiments, a nickel content in the lithium metal oxide particle may be 80 mol% or more, preferably 85 mol% or more, based on the total number of moles of all elements excluding lithium and oxygen. In this case, the high-capacity secondary battery may be effectively implemented.

In some embodiments, the nickel content in the lithium metal oxide particle may be 88 mol% or more, preferably 90 mol% or more, and more preferably 95 mol% or more, based on the total number of moles of all elements excluding lithium and oxygen. In this case, the high-capacity secondary battery may be more effectively implemented.

The cathode active material according to the exemplary embodiments may a first coating portion and a second coating portion as described later to provide improved chemical stability even though the content of nickel in the lithium metal oxide particle may be 88 mol% or more.

For example, the lithium metal oxide particle may be represented by Chemical Formula 1 below.

[Chemical Formula 1] LiₓNiₐCo_{b}M_{c}O_{y}

In Chemical Formula 1, M is at least one of Al, Zr, Ti, B, Mg, Mn, Ba, Si, Y, W, and Sr, 0.9≤x≤1.2, 1.9≤y≤2.1, 0.8≤a≤1, 0≤(b+c)/a≤0.25, 0<a+b+c≤1, 0≤b≤0.2, and 0≤c≤0.2.

In some embodiments, in the Chemical Formula 1 above, 0.85≤a≤1, preferably 0.88≤a≤1.

In some embodiments, in the Chemical Formula 1 above, 0.9≤a≤1, preferably 0.95≤a≤1.

For example, if a high-nickel based lithium metal oxide particle is employed as a cathode active material, chemical stability and life-span property of the secondary battery may be degraded. However, the cathode active material according to exemplary embodiments may include the first and second coating portions as will be described later so that the secondary battery having enhanced chemical stability and life-span properties may be achieved even if the high content of nickel is included.

In an embodiment, a doping element may be doped in the lithium metal oxide particle. For example, the doping element may include at least one of Al, Ti, Zr, B, Ba, Si, Mg, P, Sr, Wand La.

In some embodiments, the doping element may include at least one of Al and Zr.

For example, in an operation of S20, the lithium metal oxide particle may be dry-coated with a coating source containing a first metal.

For example, the dry coating may include a dry mixing and a heat treatment of the lithium metal oxide particles and the coating source containing the first metal. For example, the dry mixing may be performed in a dry high-speed mixer, and the heat treatment may be performed at a temperature from 600°C to 800°C.

In exemplary embodiments, a first coating portion including the first metal may be formed on at least a portion of a surface of the lithium metal oxide particle.

In an embodiment, the first coating portion may be formed as an island shape on the surface of the lithium metal oxide particle. For example, the first coating portion may include a plurality of coating portions, each of which has the island shape (e.g., a protrusion shape), and the plurality of coating portions may be spaced apart from each other.

For example, the first coating portion may cover 10% or more, 30% or more, or 50% or more of a total area of an outer surface of the lithium metal oxide particle.

For example, the first coating portion may cover 90% or less, 80% or less, 70% or less, or 60% or less of the total area of the outer surface of the lithium metal oxide particle.

In an embodiment, the first metal may include at least one of aluminum (Al), titanium (Ti), zirconium (Zr), magnesium (Mg), zinc (Zn), tungsten (W), niobium (Nb), strontium ( Sr), tantalum (Ta) and copper (Cu).

In some embodiments, the first metal may include Al, Ti and Zr. In this case, a cathode active material with improved chemical stability may be obtained, and the secondary battery having improved life-span properties may be efficiently achieved.

For example, the coating source containing the first metal may include at least one of Al₂O₃, Al(OH)₃, TiO₂, ZrO₂ and Zr(OH)₄.

In some embodiments, the coating source containing the first metal may include Al₂O₃, TiO₂ and ZrO₂.

For example, a particle diameter of Al₂O₃ may be from 10 nm to 70 nm. A particle diameter of TiO₂ may be from 10 nm to 70 nm, and a particle diameter of ZrO₂ may be from 20 nm to 130 nm. In this case, stability of an internal structure of the cathode active material may be further improved by the coating portion.

In an embodiment, the coating source containing the first metal may be added in an amount from 500 ppm to 10000 ppm, or 1000 ppm to 5000 ppm, based on a total weight of the lithium metal oxide particle.

For example, in an operation of S30, the dry-coated lithium metal oxide particle may be wet-coated with a coating source containing a second metal. In exemplary embodiments, a coating may be formed on at least a portion of an interface between the primary particles.

In some embodiments, the coating may be formed on at least a portion of the interface of the primary particles present at an outermost surface of the lithium metal oxide particle by the wet coating.

In some embodiments, the coating may also be formed on at least a portion of an interface between the primary particles present at an inside of the lithium metal oxide particle (e.g., present at a region around a central portion of the lithium metal oxide particle relative to outermost primary particles).

For example, a second coating portion may be formed on at least a portion of the interface between the primary particles. In this case, a side reaction with an electrolyte at the interface between the primary particles which may occur when a c-axis is changed due to a lithium insertion and desorption during charge and discharge of the secondary battery may be prevented. Accordingly, gas generation and resistance increase due to the side reaction may be reduced or avoided, and the secondary battery having high capacity and enhanced life-span properties may be achieved.

As described above, the second coating portion may be formed on at least a portion of the interface between the primary particles present in an outermost portion of the lithium metal oxide particle. The second coating portion may also be formed on at least a portion of the interface between the primary particles present at the inside of the lithium metal oxide particle (e.g., present at the region around the central portion of the lithium metal oxide particle relative to the outermost primary particles).

In some embodiments, when a radius of the lithium metal oxide particle is designated as R, the second coating portion may be formed on at least a portion of the interface between the primary particles present in a thickness region from a center to 0.75R, 0.5R or 0.25R.

In an embodiment, the second coating portion may be formed on at least a portion of a surface of the first coating portion.

In an embodiment, the second coating portion may be formed on at least a portion of a surface of the lithium metal oxide particle on which the first coating portion is not formed.

For example, the second coating portion covers the surface of the first coating portion, and may cover 70% or more, preferably 80% or more, or more preferably 90% or more of the of the total area of the outer surface of the lithium metal oxide particle on which the first coating portion is formed.

In some embodiments, the second coating portion may cover the substantially entire surface of the lithium metal oxide particle on which the first coating portion is formed (e.g., Al may be detected on the entire surface from an EDS analysis), and may be formed on at least a portion of the interface between the primary particles. In this case, the secondary battery having high capacity and improved life-span properties may be obtained.

In some embodiments, the second coating portion may be formed as a continuous phase. For example, the first coating portion may be formed as an island shape, the second coating portion may be formed in a continuous phase (e.g., as sea shape), so that the first coating portion and the second coating portion may have an island-in-sea structure.

For example, the second metal may be the same as or different from the first metal. Further, if the first metal includes a plurality of different metals, the second metal may be a metal different from all of the plurality of different metals in the first metal, or may be the same as any one of the plurality of different metals in the first metal.

For example, the coating source containing the second metal may be a coating source solution in which the second metal is dissolved in a salt form. For example, the coating source containing the second metal may be a coating source dispersion in which the second metal is dispersed.

In some embodiments, a solvent of the coating source solution or a dispersion medium of the coating source dispersion may be water. In this case, a content of residual lithium on the surface of the lithium metal oxide particle may be reduced.

For example, in the wet coating, the lithium metal oxide particle may be added to the coating source solution or the coating source dispersion, and then mixed, filtered and dried.

In some embodiments, the drying may be performed at a temperature of 100 °C or more and less than 300 °C., preferably at a temperature from 110 °C to 250 °C. For example, if the second metal included in the second coating portion is amorphous, crystallization may occur during a high-temperature heat treatment. However, when drying is performed in the above-described temperature range, crystallization of the amorphous second metal may be prevented.

If a metal has an amorphous structure, the metal may be crystallized when a dry coating accompanied by a high temperature heat treatment (e.g., in a temperature from 600 □ to 800 □) is performed.

However, in a method of preparing the cathode active material for a secondary battery according to exemplary embodiments, a dry coating may be performed in advance, and then a wet coating may be performed at a temperature less than 300 °C to prevent the crystallization of the amorphous metal. Additionally, the uniform second coating portion may be formed on the surface of the lithium metal oxide particle on which the first coating portion is formed. Accordingly, the surface and the inside of the lithium metal oxide particle may be more effectively protected from the electrolyte.

In an embodiment, the second metal may include at least one of aluminum (Al), titanium (Ti) and zirconium (Zr).

In some embodiments, the second metal may include aluminum. For example, the coating source containing the second metal may include at least one of sodium aluminate (NaAlO₂) and aluminum sulfate (Al₂(SO₄)₃).

In some embodiments, the coating source containing the second metal may be an aqueous solution (or aqueous dispersion) containing sodium aluminate (NaAlO₂). In this case, Li surface dissolution depending on pH which may occur when the coating source and the lithium metal oxide particle are mixed may be prevented. Accordingly, the more uniform second coating portion may be formed on the surface of the lithium metal oxide particle on which the first coating portion is formed.

In an embodiment, an amount of second metal included in the coating source containing the second metal may be from 500 ppm to 4,000 ppm, preferably 1,500 ppm to 3,000 ppm, based on a weight of the lithium metal oxide particle on which the first coating part is formed.

In an embodiment, a metalloid coating may be further performed on the dry and wet coated lithium metal oxide particle after performing the wet coating.

For example, a third coating portion including a metalloid may be formed on the second coating portion by the metalloid coating. In this case, the side reaction between the lithium metal oxide particle and the electrolyte may be more effectively prevented. Accordingly, the secondary battery having improved life-span properties may be achieved.

The metalloid coating may be performed by various coating methods such as a dry coating method, a wet coating, etc.

In an embodiment, the lithium metal oxide on which the first and second coating portions are formed may be dry-coated with a coating source containing a metalloid. For example, the lithium metal oxide particles on which the first and second coating portions are formed and the coating source containing the metalloid may be dry-mixed and heat-treated. For example, the dry mixing may be performed in a dry high-speed mixer, and the heat treatment may be performed at a temperature from 250°C to 400°C.

In some embodiments, the metalloid may include boron (B). For example, the coating source containing the metalloid may include at least one of HBO₂, H₃BO₃ and H₂B₄O₇. For example, boron may form a lithium boron oxide (LiBO) intermediate phase to function as a cathode electrolyte interphase (CEI). Accordingly, the side reaction between the lithium metal oxide particles and the electrolyte may be further prevented, and the secondary battery having more improved life-span properties may be achieved.

In an embodiment, the coating source containing the metalloid may be added in an amount from 100 ppm to 1,600 ppm based on the weight of the lithium metal oxide particle on which the first and second coating portions are formed.

In some embodiments, the metalloid included in the third coating portion may have an amorphous structure.

For example, the drying in the formation of the second coating portion may be performed in a vacuum atmosphere at a temperature of less than 300°C, and the metalloid coating may also be performed in an oxygen atmosphere at a temperature of 400°C or less. In this case, when the second metal and the metalloid have an amorphous structure, the amorphous structure of the second metal and the metalloid may be maintained.

In an embodiment, after the wet coating step, a dry coating that may require a heat treatment condition of 600°C or higher may not be included. In this case, the metal of the second coating portion formed at the interface of the primary particles may be prevented from being diffuse into the lithium metal oxide particle, thereby preventing a loss of the second coating portion.

As described above, a cathode active material for a secondary battery according to exemplary embodiments may include lithium metal oxide particles having a structure of a secondary particle in which a plurality of primary particles are aggregated, a first coating portion including a first metal formed on at least a portion of a surface of the lithium metal oxide particle; and a second coating portion including a second metal formed on at least a portion of an interface between the primary particles.

In an embodiment, the second coating portion may be formed on at least a portion of a surface of the first coating portion.

In an embodiment, the second coating portion may be formed on at least a portion of the surface of the lithium metal oxide particle on which the first coating portion is not formed.

As described above, the first coating portion and the second coating portion may be combined to implement the secondary battery having high capacity and improved life-span properties (e.g., a capacity retention at room temperature).

For example, the second coating portion may also be formed at an interface between the primary particles. In this case, the side reaction between the interface between the primary particles and the electrolyte which may occur when the c-axis is changed due to a lithium insertion and desorption during charge and discharge of the secondary battery may be prevented. Accordingly, a gas generation and a resistance increase due to the side reaction may be prevented so that the secondary battery having high capacity and improved life-span properties may be implemented.

For example, the second coating portion may be formed on at least a portion of the interface between the primary particles present in an outermost portion of the lithium metal oxide particle.

For example, the second coating portion may also be formed on at least a portion of the interface between the primary particles present at an inside of the lithium metal oxide particle (e.g., present at a region around a central portion of the lithium metal oxide particle relative to the outermost primary particles).

In some embodiments, when a radius of the lithium metal oxide particle is designated as R, the second coating portion may be formed on at least a portion of the interface between the primary particles present in a thickness region from a center to 0.75R, 0.5R or 0.25R.

In an embodiment, in the cathode active material, a content of the second metal at the interface of the primary particles may be greater than a content of the second metal at the inside of the primary particles (e.g., present as a doping).

For example, in an energy-dispersive X-ray spectroscopy spectrum measured for a cross-section of the cathode active material, a peak intensity of the second metal at the interface of the primary particles is greater than an average value of peak intensities of the second metal at the inside of the primary particles.

For example, in a firing process of the cathode active material manufacturing process, the second metal coated on the interface of the primary particles may be diffused into the primary particles.

However, in the cathode active material according to exemplary embodiments, a degree of an internal diffusion of the second metal may be suppressed. Accordingly, the peak intensity of the second metal at the interface between the primary particles may be greater than the average value of the peak intensities of the second metal at the inside the primary particles. Thus, chemical stability and life-span properties of the lithium metal oxide particle may be further improved.

For example, the energy-dispersive X-ray spectroscopy spectrum may be obtained using a transmission electron microscope (TEM) and an energy-dispersive X-ray spectroscopy (EDS) analysis.

Hereinafter, a cathode active material for a secondary battery according to exemplary embodiments will be described in more detail. Detailed descriptions substantially the same as those described above are omitted herein.

The cathode active material may include the lithium metal oxide particles as described above.

In an embodiment, the first coating portion may be formed as an island shape. For example, the first coating portion may include a plurality of coating portions having an island shape, and the plurality of coating portions may be spaced apart from each other.

In some embodiments, the second coating portion may be formed as a continuous phase. For example, the first coating portion may be formed as an island shape, and the second coating portion may be formed in a continuous phase (e.g., a sea shape). Accordingly, the first coating portion and the second coating portion may have an island-sea shape.

In some embodiments, the second coating portion may cover substantially the entire surface of the lithium metal oxide particle on which the first coating portion is formed (e.g., Al may be detected on the entire surface from the EDS analysis), and may also be formed at the interface of the primary particles. In this case, the secondary battery having high capacity and improved life-span properties may be achieved.

In an embodiment, the first coating portion may include at least one of a first metal and a first metal oxide which are particulates.

In an embodiment, the second coating portion may include at least one a second metal and a second metal oxide which are particulates.

In some embodiments, a particle size of the first metal and the first metal oxide may be from 5 nm to 50 nm.

In some embodiments, a thickness of the second coating portion may be from 10 nm and 50 nm.

In an embodiment, the first metal may include at least one of aluminum (Al), titanium (Ti), zirconium (Zr), magnesium (Mg), zinc (Zn), tungsten (W), niobium (Nb), strontium (Sr), tantalum (Ta) and copper (Cu).

In some embodiments, the first metal may include aluminum, titanium and zirconium.

For example, the first coating portion may include at least one of aluminum oxide, titanium oxide and zirconium oxide.

In some embodiments, the first coating portion may include aluminum oxide, titanium oxide and zirconium oxide. In this case, chemical stability of the cathode active material may be improved, and the secondary battery having high capacity and improved life-span properties may be achieved.

In an embodiment, the second metal may include at least one of aluminum, titanium and zirconium.

In some embodiments, the second metal may include aluminum.

In some embodiments, the second coating portion may include aluminum oxide. For example, aluminum may react with fluorine in the electrolyte of the secondary battery to form AlF₃. AlF₃ may stabilize the surface of the lithium metal oxide particle. Accordingly, life-span properties of the secondary battery may be further improved.

In an embodiment, the second coating portion may include at least one of a second metal having an amorphous structure and a second metal oxide having an amorphous structure. In this case, a more uniform second coating portion may be formed on the lithium metal oxide particle on which the first coating portion is formed, and the inside of the lithium metal oxide particle may be more effectively protected from the electrolyte.

In some embodiments, the second coating portion may only include the second metal having the amorphous structure and/or the second metal oxide having the amorphous structure.

In some embodiments, the second coating portion may include at least one of Al₂O₃, lithium-aluminum oxide, AlOOH and Al(OH)₃ which may have an amorphous structure.

In an embodiment, the cathode active material may further include the third coating portion including the metalloid formed on the second coating portion. In this case, the side reaction between the lithium metal oxide and the electrolyte may be more effectively prevented. Accordingly, the secondary battery having improved life-span properties may be achieved.

The third coating portion may cover the entire surface of the lithium metal oxide particle on which the first coating portion and the second coating portion are formed, or may cover at least a portion of the lithium metal oxide particle.

In some embodiments, the metalloid may be boron (B). For example, boron may form a lithium boron oxide (LiBO) intermediate phase to function as a cathode electrolyte interphase (CEI). In this case, the side reaction between the lithium metal oxide particle and the electrolyte may be further prevented. Accordingly, the secondary battery having improved life-span properties may be achieved.

In some embodiments, the third coating portion may include at least one of a metalloid having an amorphous structure and a metalloid oxide having an amorphous structure. In this case, the third coating portion may be more uniformly formed.

In some embodiments, the third coating portion may include at least one of lithium-boron oxide, LiBO, Li₂BO₂, Li₂B₄O₇ and Li₄BO₃ which may have an amorphous structure.

In some embodiments, the cathode active material may further include an intermediate portion including both the second metal and the metalloid between the second coating portion and the third coating portion.

In some embodiments, in the case the second coating portion includes aluminum and the third coating portion includes boron, the intermediate portion may include both aluminum and boron.

For example, the intermediate portion may include at least one of LiAlBOH₄, Li₄AlB, Li₃AlB₃O and a lithium boron aluminum-containing oxide.

### <Lithium Secondary Battery>

FIG. 2 is a schematic cross-sectional view illustrating a lithium secondary battery in accordance with exemplary embodiments.

Referring to FIG. 2, a lithium secondary battery may include a cathode 100 and an anode 130. The lithium secondary battery may further include a separation layer interposed between the cathode 100 and the anode 130.

The cathode 100 may include a cathode current collector 105 and a cathode active material layer 110 coated on the cathode current collector 105.

For example, a cathode slurry may be prepared by mixing and stirring a cathode active material according to exemplary embodiments as described above, a cathode binder, a conductive agent, etc. The cathode slurry may be coated on the cathode current collector 105, and then dried and pressed to form the cathode 100.

The cathode current collector 105 may include stainless-steel, nickel, aluminum, titanium, copper or an alloy thereof. Preferably, aluminum or an alloy thereof may be used.

For example, the cathode binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The anode 130 may include an anode current collector 125 and an anode active material layer 120 formed on the anode current collector 125.

For example, an anode active material to may be mixed and stirred with an anode binder, a conductive material, etc., to form an anode mixture. The anode slurry may be coated on the anode current collector 125, and then dried and pressed to form the anode 130.

The anode current collector 125 may include, e.g., gold, stainless steel, nickel, aluminum, titanium, copper or an alloy thereof, and preferably may include copper or a copper alloy.

The anode active material may include a material that may be capable of adsorbing and ejecting lithium ions. For example, a carbon-based material such as a crystalline carbon, an amorphous carbon, a carbon complex or a carbon fiber, a silicon-based material, a lithium alloy, etc., may be used.

The amorphous carbon may include, e.g., a hard carbon, cokes, a mesocarbon microbead (MCMB), a mesophase pitch-based carbon fiber (MPCF), etc.

The crystalline carbon may include, e.g., natural graphite, artificial graphite, graphitized cokes, graphitized MCMB, graphitized MPCF, etc.

The silicon-based material may include Si, SiOx (0<x<2), Si/C, SiO/C, Si-metal, etc.

The lithium alloy may include a metal element such as aluminum, zinc, bismuth, cadmium, antimony, silicon, lead, tin, gallium, or indium.

The binder and the conductive material substantially the same as or similar to those used in the cathode active material layer 110 may be used. For example, the anode binder may include, e.g., an aqueous binder such as styrene-butadiene rubber (SBR) for compatibility with the carbon-based active material, and may be used with a thickener such as carboxymethyl cellulose (CMC).

In some embodiments, an area of the anode 130 (e.g., a contact area with the separator 140) may be larger than that of the cathode 100 .

For example, the separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like.

For example, the separation layer 140 may be also formed from a non-woven fabric including a glass fiber with a high melting point, a polyethylene terephthalate fiber, or the like.

An electrode cell may be defined by the cathode 100, the anode 130 and the separation layer 140, and a plurality of the electrode cells may be stacked to form an electrode assembly. For example, the electrode assembly 150 may be formed by winding, laminating or zigzag-folding (z-folding) of the separation layer 140.

In an embodiment, the lithium secondary battery may include a cathode lead and an anode lead (not illustrated). The cathode lead and the anode lead may be connected to the cathode 100 and the anode 130, respectively, and may protrude to an outside of a case 160.

For example, the cathode lead may be electrically connected to the cathode current collector 105 . In addition, the anode lead may be electrically connected to the anode current collector 125 .

For example, the cathode current collector 105 may include a protrusion (cathode tab, not illustrated) at one side thereof. The cathode active material layer 110 may not be formed on the cathode tab. The cathode tab may be integral with the cathode current collector 105 or may be connected with the cathode current collector 105 by, e.g., welding or the like. The cathode current collector 105 and the cathode lead may be electrically connected to each other via the cathode tab.

The anode current collector 125 may include a protrusion (anode tab, not illustrated) at one side thereof. The anode active material layer 120 may not be formed on the anode tab. The anode tab may be integral with the anode current collector 125 or may be connected with the anode current collector 125 by, e.g., welding. The anode current collector 125 and the anode lead may be electrically connected to each other via the anode tab.

In an embodiment, the electrode assembly may include a plurality of cathodes and a plurality of anodes. For example, a plurality of cathodes and anodes may be alternately stacked, and the separation layer may be interposed between the cathode and the anode. The lithium secondary battery may include a plurality of cathode tabs and a plurality of anode tabs protruding from each of the plurality of cathodes and the plurality of anodes.

In an embodiment, the cathode tabs (or anode tabs) may be laminated, compressed and/or welded to form a cathode tab stack (or anode tab stack). The cathode tab stack may be electrically connected to the cathode lead. The anode tab stack may be electrically connected to the anode lead.

The electrode assembly may be accommodated together with the electrolyte in the case 160 to form the lithium secondary battery.

The electrolyte may include, for example, a lithium salt, and the lithium salt may be accommodated in a case in a non-aqueous electrolyte state together with an organic solvent.

The lithium salt may be, e.g., represented as Li⁺X⁻.

An anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FS0₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc. In some embodiments, the lithium salt may include at least one of LiBF₄ and LiPF₆.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Preparation Example 1: Preparation of lithium metal oxide particle with Ni 98-composition (Zr-doped)

NiSO₄ and CoSO₄ were added to distilled water from which dissolved oxygen was removed by bubbling with N₂ for 24 hours by a molar ratio of 98:2 to prepare a mixed solution.

The mixed solution was put into a continuous stirred-tank reactor (CSTR) at 50 °C, and a co-precipitation reaction was performed for 30 hours using NaOH and NH₄OH as a precipitating agent and a chelating agent, respectively, to prepare a metal hydroxide (Ni_{0.98}Co_{0.02}(OH)₂).

The metal hydroxide was dried at 80 °C for 12 hours and then re-dried at 110 °C for 12 hours.

Lithium hydroxide (LiOH • H2O) was added so that a molar ratio of the metal hydroxide and lithium hydroxide was 1:1.03. Subsequently, 4000 ppm of ZrO₂ based on the weight of the metal hydroxide was added, and then stirred and mixed uniformly for 5 minutes to form a mixture.

The mixture was placed in a kiln, annealed to 670°C at a rate of 2°C/min, and maintained at 670°C for 10 hours. Oxygen gas was passed continuously at a flow rate of 10 mL/min while the raising and maintaining the temperature.

After the annealing, natural cooling was performed to room temperature, and grinding and classification were further performed to obtain lithium metal oxide (LiNi_{0.98}Co_{0.02}O₂) doped with Zr having an average particle diameter (D₅₀) of 13 µm and a secondary particle structure in which primary particles were aggregated.

### Preparation Example 1-2: Preparation of lithium metal oxide particle with Ni98 composition (without Zr doping)

Processes the same as those in Preparation Example 1 were performed except that Zr doping was omitted.

### Preparation Example 2: Preparation of lithium metal oxide particle with Ni 94 composition (Zr-doped)

Processes the same as those in Preparation Example 1 were performed except that NiSO₄, CoSO₄ and MnSO₄ were used in a molar ratio of 94:5:1 to prepare a metal hydroxide (Ni_{0.94}Co_{0.05}Mn_{0.01}(OH)₂), and the mixture of the metal hydroxide and lithium hydroxide (LiOH • H2O) was annealed at 680°C.

### Example 1

### 1. Preparation of cathode active material

### (1) Dry coating of Al, Ti and Zr (formation of first coating portion)

Al₂O₃ (particle diameter: 30 nm to 70 nm), TiO₂ (particle diameter: 30 nm to 70 nm) and ZrO₂ (particle diameter: about 100 nm) were added to the lithium metal oxide particles with the Ni 98% composition synthesized in Preparation Example 1 in a dry high-speed mixer, and mixed uniformly for 5 minutes to prepare a mixture.

Added amounts of Al₂O₃, TiO₂ and ZrO₂ were 1500 ppm, 1200 ppm and 500 ppm, respectively, based on the weight of the lithium metal oxide particles.

The mixture was placed in a kiln, annealed to 650°C at a rate of 2°C/min, and maintained at 650°C for 10 hours. Oxygen gas was passed continuously at a flow rate of 10 mL/min while raising and maintaining the temperature.

After the annealing, natural cooling was performed to room temperature, followed by grinding and classification to obtain lithium metal oxide particles having a first coating portion (Al, Ti and Zr) formed thereon.

### (2) Wet coating of Al (formation of second coating portion)

NaAlO₂ was dissolved in water so that a content of Al was 1000 ppm based on the weight of the lithium metal oxide particles on which the first coating portion was formed to prepare an aqueous NaAlO₂ solution.

The lithium metal oxide particles having the first coating portion was added to the aqueous NaAlO₂ solution with a volume ratio of 1:1, stirred for 10 minutes, and then filtered.

The filtered lithium metal oxide particles was dried at 130 °C for 12 hours to obtain the lithium metal oxide particles having the first coating portion and a second coating portion (Al) formed thereon.

### (3) Dry coating of B (formation of third coating portion)

400 ppm of H₃BO₃ based on a weight of the lithium metal oxide particles including the first and second coating portions formed thereon were added into a dry high-speed mixer with the lithium metal oxide particles including the first and second coating portions formed thereon, and uniformly mixed for 5 minutes to form a mixture.

The mixture was placed in a kiln, annealed to 300°C at 3°C/min, and maintained at 300°C for 5 hours. Oxygen gas was passed continuously at a flow rate of 10 mL/min while raising and maintaining the temperature.

After the annealing, natural cooling was performed to room temperature, followed by grinding and classification to obtain lithium metal oxide particles of Example 1 including the first coating portion, the second coating portion and a third coating portion (B) formed thereon.

### 2. Fabrication of secondary battery

A cathode slurry was prepared by mixing the cathode active material, carbon black as a conductive material and PVDF as a binder in a weight ratio of 92:5:3.

The cathode slurry was uniformly applied to an aluminum foil having a thickness of 15 µm, dried and pressed to prepare a cathode.

A porous polyethylene film having a thickness of 21 µm was interposed between the cathode and a lithium foil as a counter electrode to from an electrode assembly.

A coin half-cell secondary battery was manufactured according to a widely-known fabrication using the electrode assembly and a 1.0 M LiPF₆ solution (EC/EMC mixed solvent by a volume ratio of 3:7) as an electrolyte.

### Example 2

A secondary battery was fabricated by the same method as that of Example 1 except that the lithium metal oxide particle of Preparation Example 2 was used.

### Example 3

A secondary battery was fabricated by the same method as that of Example 1 except that the formation of the third coating portion was omitted.

### Comparative Example 1

A secondary battery was fabricated by the same method as that of Example 1 except that the formation of the first coating portion and the second coating portion was omitted.

### Comparative Example 2

A secondary battery was fabricated by the same method as that of Example 1 except that the formation of the first coating portion was omitted.

### Comparative Example 3

A secondary battery was fabricated by the same method as that of Example 1 except that the formation of the second coating portion was omitted.

### Comparative Example 4

A secondary battery was fabricated by the same method as that of Example 1 except that (2) wet coating of Al in Example 1 was replaced with (2-2) dry coating of Al as follows.

### (2-2) Dry coating of Al (formation of second coating portion)

1000 ppm of Al₂O₃ (particle diameter: 30 nm to 70 nm) based on a weight of the lithium metal oxide particles on which the first coating portion was formed were added to a dry high-speed mixer with the lithium metal oxide particles on which the first coating portion was formed, and then uniformly mixed for 5 minutes to prepare a mixture.

The mixture was placed in a kiln, annealed to 650°C at a rate of 2°C/min, and maintained at 650°C for 10 hours. Oxygen gas was passed continuously at a flow rate of 10 mL/min while raising and maintaining the temperature.

After annealing, natural cooling was performed to room temperature, followed by grinding and classification to obtain lithium metal oxide particles having the first coating portion and a second coating portion (Al) formed thereon.

### Comparative Example 5

A secondary battery was fabricated by the same method as that of Example 1 except that (2) wet coating of Al was performed in advance, and then (1) dry coating of Al, Ti and Zr was performed.

### Comparative Example 6

A secondary battery was fabricated by the same method as that of Example 1 except that the lithium metal oxide particle of Preparation Example 1-2 was used, and the formation of the first coating portion was omitted.

### Comparative Example 7

A secondary battery was fabricated by the same method as that of Example 1 except that the lithium metal oxide particle of Preparation Example 1-2 was used, and the formation of the second coating portion was omitted.

### Comparative Example 8

A secondary battery was fabricated by the same method as that of Example 1 except that the lithium metal oxide particle of Preparation Example 1-2 was used, and the formation of the first coating portion and the second coating portion was omitted.

### Comparative Example 9

A secondary battery was fabricated by the same method as that of Example 2 except that the formation of the first coating portion and the second coating portion was omitted.

### Comparative Example 10

A secondary battery was fabricated by the same method as that of Example 2 except that the formation of the second coating portion was omitted.

### Comparative Example 11

A secondary battery was fabricated by the same method as that of Example 2 except that the formation of the first coating portion was omitted.

### Experimental Example 1: Evaluation of interface coating between primary particles

The formation of Al coating at an interface of primary particles was detected from transmission electron microscope (TEM) images, and EDS-mapping images obtained by energy-dispersive X-ray spectroscopy (EDS), and evaluated as follows.
i) Interface Al coating was detected: ○
ii) No interface Al coating detected: ×

### Experimental Example 2: Evaluation of room temperature properties

### (1) Measurement of initial capacity

One cycle of 0.1 C-rate CC/CV charge (4.3V, 0.05C cut-off) and 0.1 C-rate CC discharge (3.0V cut-off) was performed for the secondary batteries of Examples and Comparative Examples at 25°C, and then an initial discharge capacity (hereinafter, referred to as an initial capacity) was measured.

The measured initial dose values are shown in Tables 1 and 2.

### (2) Evaluation of life-span (capacity retention) at room temperature

150 cycles of 0.5 C-rate CC/CV charging (4.3V 0.05C Cut-Off) and 1.0 C-rate CC discharge (3.0V Cut-Off) were performed for the secondary batteries of Examples and Comparative Examples at 25°C, and a discharge capacity at the 150th cycle was measured.

A room temperature capacity retention was calculated as a percentage by dividing the discharge capacity measured at the 150th cycle by the initial capacity measured in the above (1).

### (3) Evaluation of room temperature resistance and resistance (DC-IR) increasing ratio

When evaluating the capacity retention at room temperature in the above (2), resistance values and resistance increase rates were measured for predetermined sections (1st cycle, 30th cycle, 60th cycle, 90th cycle, 120th cycle and 150th cycle).

The resistance value was calculated by dividing a difference between a voltage immediately after discharging (0 sec, SOC 100) and a voltage 1 minute after discharging by a current value when charging (4.3V 0.05C Cut-Off) and then 1.0 C-rate CC discharging was performed.

The resistance increasing ratio was calculated as a percentage by dividing the resistance value measured at each section by an initial resistance value (1th cycle) as expressed by Equation below.

DC-IR increasing ratio (%) = (resistance value at n^{th} section/initial resistance value) × 100

The results are shown in Tables 1 and 2 below.

**[Table 1]**

| | first coating portion | second coating portion | | third coating portion | Initial Capacity (mAh/g) | Room temperature capacity retention (%) | Room temperature initial DC-IR (mΩ) | DC-IR increasing ratio(%) |
|---|---|---|---|---|---|---|---|---|
| | | interface | surface | | | | | |
| Example 1 | ○ | ○ | ○ | ○ | 233.2 | 85 | 48.3 | 132 |
| Example 3 | ○ | ○ | ○ | × | 230.1 | 63 | 47.4 | 170 |
| Comparative Example 1 | × | × | × | ○ | 222.8 | 67 | 81.8 | 236 |
| Comparative Example 2 | × | ○ | ○ | ○ | 228.6 | 69 | 58.6 | 167 |
| Comparative Example 3 | ○ | × | × | ○ | 225.3 | 78 | 52.6 | 170 |
| Comparative Example 4 | ○ | × | ○ | ○ | 212.5 | 65 | 58.2 | 152 |
| Comparative Example 5 | ○ | × | ○ | ○ | 214.6 | 64 | 50.8 | 165 |
| Comparative Example 6 | × | ○ | ○ | ○ | 223.7 | 66 | 88.2 | 187 |
| Comparative Example 7 | ○ | × | × | ○ | 219.3 | 65 | 59.4 | 190 |
| Comparative Example 8 | × | × | × | ○ | 222.8 | 52 | 93.2 | 255 |

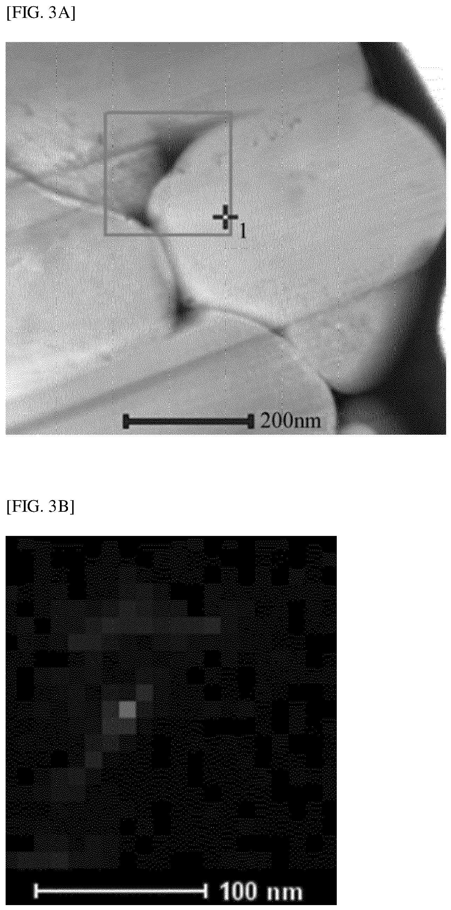

FIG. 3A is a transmission electron microscope (TEM) image of a cross-section of the lithium metal oxide particle of Example 1. FIG. 3B is an EDS-mapping image obtained by an EDS analysis of an Al distribution in a region indicated in FIG. 3A. Referring to FIG. 3B, the Al coating was also formed at the interface between the primary particles in the lithium metal oxide particle of Example 1.

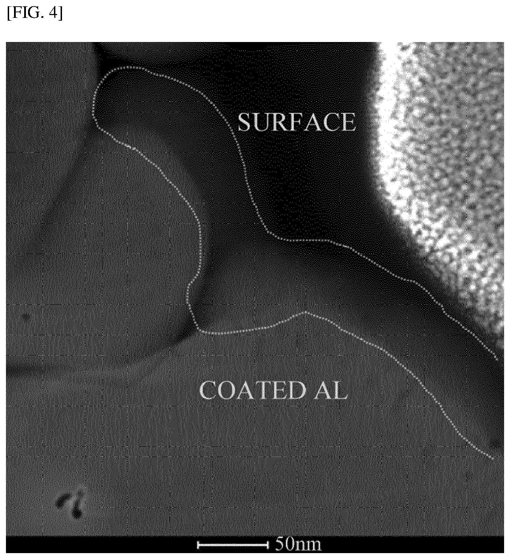

FIG. 4 is a TEM image of a cross-section around a surface of the lithium metal oxide particle of Example 1. The Al coating having a thickness of 20 nm to 50 nm was also observed on the surface of the lithium metal oxide particle.

Additionally, the EDS spectrum for the cross-section of the lithium metal oxide particle of Example 1 was obtained, and then an Al peak intensity at the interface and at an inside of the primary particles was analyzed. In the analysis, the Al peak intensity at the interface of the primary particles was greater than an average value of the Al peak intensities at the inside of the primary particles.

In Comparative Examples 1, 3 to 5, and 7 to 8, the Al coating was not observed at the interface of the primary particles.

In Comparative Example 5, the wet coating of Al was performed when forming the second coating portion, but the Al coating was not observed at the interface of the primary particles. It is assumed that Al components present at the interface of the primary particles were diffused into the inside of the primary particle.

For example, lithium metal oxide particles having a composition of Ni 90 or higher may have a structural change due to a lithium desorption during an initial charging. Thus, it may be advantageous to stabilize the structure of the lithium metal oxide particle and suppress a formation of an irreversible structure. In the case of the secondary battery of Example 1, the discharge capacity of 233.2 mAh/g was obtained by sequentially performing dry and wet coating to suppress the structural change of lithium metal oxide particle. However, the discharge capacity of the secondary batteries of Comparative Examples was measured to be less than 230 mAh/g.

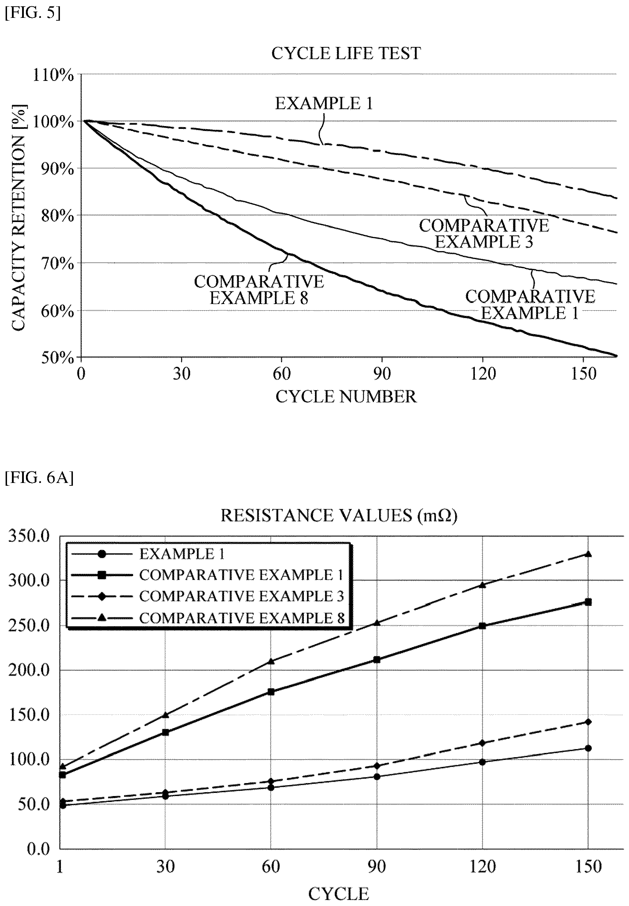

Referring to Table 1 and FIG. 5, the secondary battery of Example 1 provided enhanced capacity retention compared to those from the secondary batteries of Comparative Examples.

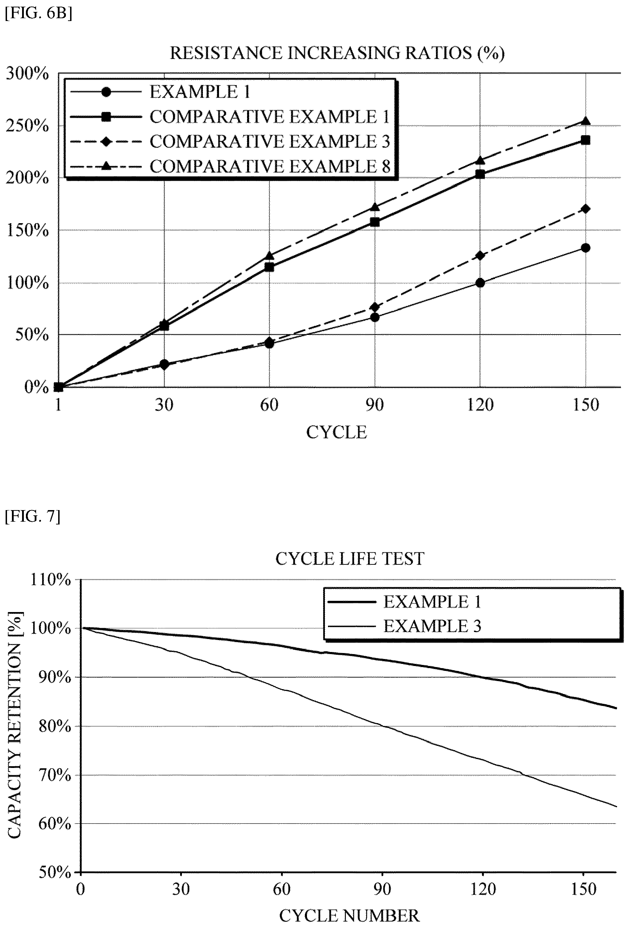

As confirmed in FIGS. 6A and 6B , the initial DC-IRs (80 mΩ or more) of the secondary batteries of Comparative Examples 1 and 8 were higher than that from the secondary battery of Example 1 (48.3 mΩ). Further, the secondary batteries of Comparative Examples 1 and 8 showed the DC-IR increase ratio of 200% or more.

The initial DC-IRs of the secondary batteries of Example 1 and Comparative Example 3 were similar to each other. However, the DC-IR increase ratio (132%) of the secondary battery of Example 1 was remarkably lower than that of the secondary battery of Comparative Example 3 (170%).

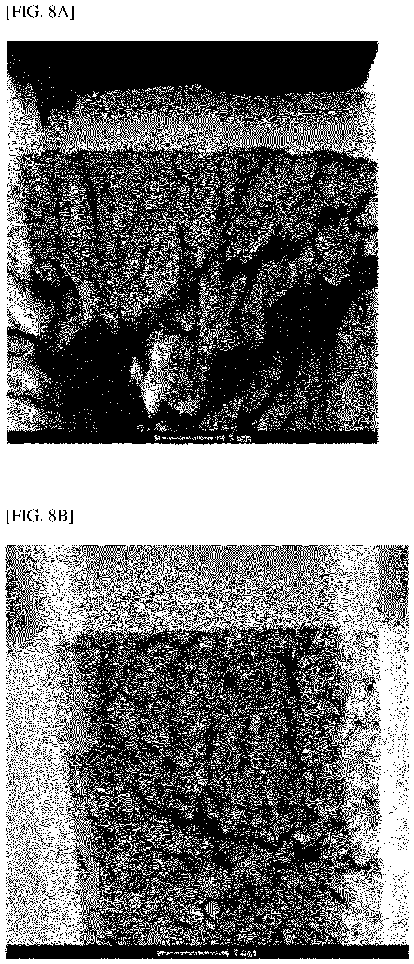

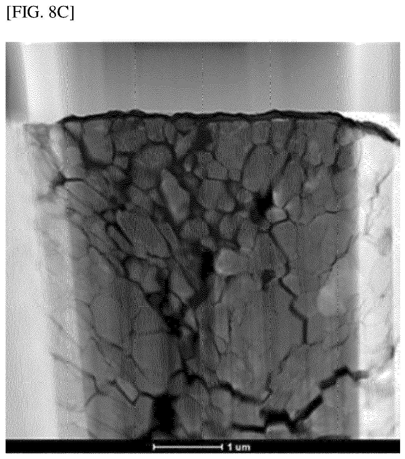

FIGS. 8A to 8C shows TEM images of cross-sections from cathode active material layers after repeating 150 cycles of charge and discharge of the secondary batteries according to Comparative Examples 1 and 3 and Example 1, respectively.

In Comparative Example 1, cracks occurred in most of the secondary particles in which the primary particles were aggregated by repeated c-axis changes due to lithium insertion and desorption. For example, primary particles separated by the cracks may cause a separation of a conductive network for an electron mobility, thereby to cause a decrease of capacity and an increase of internal resistance in the secondary battery. In Comparative Example 3, cracks less than those from Comparative Example 1 occurred, but a significant amount of cracks were caused.

In Example 1, cracks were remarkably suppressed in the secondary particle.

As shown in Table 1, the initial capacities and DC-IRs of the secondary batteries of Examples 1 and 3 were similar to each other. However, as confirmed in in Table 1 and FIG. 7, the secondary battery of Example 1 using lithium metal oxide particles with an additional B coating provided improved capacity retention at room temperature and DC-IR increasing ratio compared to those from the secondary battery of Example 3.

**[Table 2]**

| | first coating portion | second coating portion | | third coating portion | Initial Capacity (mAh/g) | Room temperature capacity retention (%) | Room temperature initial DC-IR (mΩ) | DC-IR increasing ratio(%) |
|---|---|---|---|---|---|---|---|---|
| | | interface | surface | | | | | |
| Example 2 | ○ | ○ | ○ | ○ | 225.1 | 86.5 | 35.6 | 98 |
| Comparative Example 9 | × | × | × | ○ | 224.0 | 71.1 | 51.3 | 145 |
| Comparative Example 10 | ○ | × | × | ○ | 222.2 | 79.8 | 38.0 | 115 |
| Comparative Example 11 | × | ○ | ○ | ○ | 221.9 | 73.0 | 40.1 | 133 |

Referring to Table 2, in the lithium metal oxide particle of Example 2, the Al coating was detected at the interface of the primary particles through the TEM analysis and EDS-mapping.

Further, the secondary battery of Example 2 provided the improved initial capacity, capacity retention and DC-IR increasing ratio compared to those from the secondary battery of Comparative Examples.

## Claims

1. A cathode active material for a secondary battery, comprising:
a lithium metal oxide particle having a secondary particle structure in which a plurality of primary particles are aggregated;
a first coating portion formed on at least a portion of a surface of the lithium metal oxide particle, the first coating portion comprising a first metal; and
a second coating portion formed on at least a portion of an interface between the primary particles, the second coating portion comprising a second metal.

2. The cathode active material for a secondary battery of claim 1, wherein the second coating portion is also formed on at least a portion of a surface of the first coating portion.

3. The cathode active material for a secondary battery of claim 2, wherein the second coating portion is also formed on at least a portion of the surface of the lithium metal oxide particle on which the first coating portion is not formed.

4. The cathode active material for a secondary battery of claim 3, wherein the first coating portion and the second coating portion have an island-sea shape.

5. The cathode active material for a secondary battery of claim 1, wherein, in an energy-dispersive X-ray spectroscopy spectrum measured for a cross-section of the cathode active material, a peak intensity of the second metal from the interface of the primary particles is greater than an average value of peak intensities of the second metal from an inside of the

6. The cathode active material for a secondary battery of claim 1, wherein the lithium metal oxide particle comprises nickel, and a content of nickel in the lithium metal oxide particle is 88 mol% or more based on a total number of moles of all elements excluding lithium and oxygen.

7. The cathode active material for a secondary battery of claim 1, wherein the first metal comprises at least one selected from the group consisting of aluminum, titanium, zirconium, magnesium, zinc, tungsten, niobium, strontium, tantalum and copper.

8. The cathode active material for a secondary battery of claim 1, wherein the second metal comprises at least one of aluminum, titanium and zirconium.

9. The cathode active material for a secondary battery of claim 1, further comprising a third coating portion formed on at least a portion of the second coating portion, the third coating portion comprising a metalloid.

10. The cathode active material for a secondary battery of claim 9, wherein the metalloid includes boron.

11. A lithium secondary battery, comprising:
a cathode comprising the cathode active material for a secondary battery of claim 1; and

12. A method of preparing a cathode active material for a secondary battery, comprising:
preparing a lithium metal oxide particle having a secondary particle structure in which a plurality of primary particles are aggregated;
dry-coating the lithium metal oxide particle with a coating source containing a first metal; and
wet-coating the dry-coated lithium metal oxide particle with a coating source containing a second metal so that at least a portion of an interface between the primary particles is coated.

13. The method of claim 12, wherein the wet-coating is performed using water as a solvent.

14. The method of claim 13, wherein the wet-coating comprises mixing the coating source containing the second metal and the dry-coated lithium metal oxide particle; and
drying at a temperature of 100°C or more and less than 300° C.

15. The method of claim 12, further comprising coating the wet-coated lithium metal oxide particle with a coating source containing a metalloid.
